# EUROPEAN PATENT APPLICATION

(11) **EP 3 278 848 A2**
(43) Date of publication of application: **07.02.2018**
(21) Application number: 17183867.5
(22) Date of filing: 28.07.2017
(51) Int. Cl.: A63F 13/22, A63F 13/26, A63F 13/355, A63F 13/63, A63F 13/77

(54) **A PLATFORM FOR SHARING SETUP CONFIGURATION AND A SETUP CONFIGURATION METHOD IN ASSOCIATION THEREWITH**

(30) Priority: 05.08.2016 SG 10201606479P
(71) Applicant: Creative Technology Ltd., Singapore 609921 (SG)
(72) Inventor: LEE, Yee Shian, 120459 Singapore (SG)
(74) Representative: Talbot-Ponsonby, Daniel Frederick

(57) **Abstract**

There is provided a setup configuration system and method. The method includes a setup step where a platform is provided for setup configuration of at least one peripheral device coupled to a computer, a processing step where output signals are generated based on the setup configuration using the platform and a sharing step where the generated output signals are communicated for setup configuration of corresponding at least one peripheral device coupled to an electronic device. Setup configuration of the corresponding at least one peripheral device can be based on received output signals via at least one of manual setup and automatic setup.

## Description

### Field Of Invention

The present disclosure generally relates to a platform for sharing setup configuration.

### Background

Electronic games can be considered a common form of entertainment for the masses.

However, gaming experience can be detracted due to a player's (i.e., gamer's) inexperience and unfamiliarity with the game.

Particularly, it might be required for an amateur player to go through lengthy tutorials etc. to learn basic game control mechanisms which may include setting up equipment (joystick, keyboard, audio output devices etc.) required for playing the game.

Thus a steep learning curve could prove an obstacle for an amateur gamer who might be interested in playing a particular new game.

It is therefore desirable to provide a solution to address the foregoing problem.

### Summary of the Invention

In accordance with an aspect of the disclosure, there is provided a system for providing a setup configuration of at least one peripheral device. The system comprises a computer coupled to at least one peripheral device; a platform for setup configuration of the at least one peripheral device coupled to the computer; and an electronic device coupled to at least one peripheral device. The computer is configured to generate output signals based on the setup configuration and to communicate said output signals to the electronic device, and the electronic device is configured to receive the output signals and to base setup configuration of the at least one peripheral device coupled to the electronic device on the received output signals via at least one of manual setup and automatic setup.

In accordance with another aspect of the disclosure, there is provided a setup configuration method. The setup configuration method can include a setup step, a processing step and a sharing step.

In regard to the setup step, a platform can be provided for setup configuration of at least one peripheral device (e.g., keyboard, mouse) coupled to a computer.

In regard to the processing step, output signals can be generated (e.g., the computer can include a processor which is capable of generating the output signals) based on the setup configuration using the platform.

In regard to the sharing step, the generated output signals can be communicated (i.e., to an electronic device) for setup configuration of corresponding at least one peripheral device coupled to an electronic device.

Setup configuration of the corresponding at least one peripheral device can be based on received output signals via one or both of manual setup and automatic setup.

### Brief Description of the Drawings

Embodiments of the disclosure are described hereinafter with reference to the following drawings, in which:
Fig. 1 shows a system in which a platform can be provided for setup control of one or more peripheral devices, according to an embodiment of the disclosure;
Fig, 2 shows the platform of Fig. 1 can be in the form of a graphics user interface (GUI), according to an embodiment of the disclosure;
Fig. 3 shows an exemplary appearance of the GUI of Fig. 2, according to an embodiment of the disclosure; and
Fig. 4 shows a flow diagram for a setup configuration method in association with the system of Fig. 1, according to an embodiment of the disclosure.

### Detailed Description

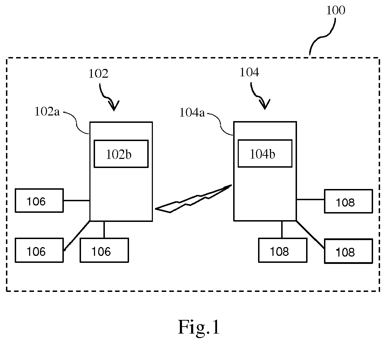

Representative embodiments of the disclosure, for addressing the foregoing problem(s), are described hereinafter with reference to Fig. 1 to Fig. 4.

Specifically, the present disclosure contemplates a solution for improving software (e.g., a game) user experience for, for example, an amateur user (e.g., gamer). For example, it is appreciable that an amateur gamer (i.e., a gamer who could be unfamiliar with a game) may not be able to fully enjoy playing a game due to unfamiliarity. Having to go through lengthy/complicated tutorials etc. associated with the game may further detract from gaming experience. To alleviate issues owing to gaming inexperience, and thus improving gaming experience, the present disclosure contemplates a platform that can be used for setup configuration(s) of one or more tool(s) required to play a game. Such a platform can be used by more experienced gamers and referred to by amateur gamer(s). That is, gaming experience (e.g., setup configuration(s) performed by more experienced gamers) can thus be shared via the platform. In this manner, the learning curve required for an amateur gamer familiarizing himself/herself with a game need not be unduly steep, thus improving experience.

Sharing of such a platform could, for example, be based on a device to a device based sharing (i.e., a "one to one" type sharing) or cloud based sharing (e.g., "one to many" type sharing). Moreover, such a platform can be in the form of a graphics user interface (GUI) as will be discussed in further detail hereinafter.

Fig. 1 shows a system 100 in accordance with an embodiment of the disclosure. The system 100 can include a computer 102 (e.g., a Smartphone, a laptop, a tablet, a desktop personal computer) which can, for example, be suitable for gaming and an electronic device 104 (which can, for example, be another computer). The system 100 can further include a first set of peripherals 106 and a second set of peripherals 108. Each of the first set of peripherals 106 and the second set of peripherals 108 can include a plurality of peripheral devices (e.g., audio output devices such as speakers, pointing devices such as a mouse, keyboards). The computer 102 can be coupled to the first set of peripherals 106 and the electronic device 104 can be coupled to the second set of peripherals 108. The computer 102 can be coupled to the electronic device 104 such that the computer 102 can communicate with the electronic device 104. Coupling between the computer 102 and the electronic device 104 can be via one or both of wired coupling and wireless coupling.

The computer 102 can include a body 102a such as a casing shaped and dimensioned to carry a computer display screen 102b. Similarly, the electronic device 104 can include a body 104a such as a casing shaped and dimensioned to carry a device display screen 104b.

The computer 102 can be configured to run a platform for use by a user of the computer 102 to configure one or more peripheral devices in the first set of peripherals 106. Specifically, the platform can be used by the user for setup configuration of one or more peripheral devices in the first set of peripherals 106. The platform can, in one embodiment, be a native type platform (e.g., a local software residing in, and run/executed by, the computer 102). The platform can, in another embodiment, be a hosted type platform (e.g., a cloud based platform which can be hosted by another device such as a server external to the computer 102).

The computer 102 can be configured to generate output signals based on the setup configuration. For example, the computer 102 can include a processor (not shown) which can be configured to generate output signals. Output signals can be communicated from the computer 102 to the electronic device 104.

In one embodiment, output signals received by the electronic device 104 can be the basis of manual setup of one or more peripheral devices in the second set of peripherals 108. For example, the output signals can correspond to a screen capture of the computer display screen 102b showing the platform with the relevant setup configuration for one or more peripheral devices in the first set of peripherals 106. The output signals received can be displayed via the device display screen 104b. In this regard, output signals generated by, and communicated from, the computer 102 can correspond to graphics based output signals which can be visually perceivable via the device display screen 104b.

In another embodiment, output signals received by the electronic device 104 can be the basis of automatic setup of one or more peripheral devices in the second set of peripherals 108. For example, the output signals can correspond to the setup configuration data for one or more peripheral devices in the first set of peripherals 106. Such setup configuration data, received by the electronic device 104, can be used to automatically (i.e., without user intervention by a user of the electronic device 104) configure corresponding one or more peripheral devices in the second set of peripherals 108. In this regard, output signals generated by, and communicated from, the computer 102 can correspond to control data based output signals which need not necessarily be visually perceivable via the device display screen 104b.

For example, where output signals are based on setup configuration of a keyboard coupled to the computer 102, a corresponding keyboard coupled to the electronic device 104 can be configured based on the received output signals via manual setup and/or automatic setup.

The electronic device 104 can be configured to run a platform analogous to that being run by the computer 102. In this regard, the earlier discussion concerning the platform in relation to the computer 102 analogously applies. Specifically, the platform run by the electronic device 104 can be used by a user of the electronic device 104 for setup configuration of one or more peripheral devices in the second set of peripherals 108.

In the case of manual setup, a user of the electronic device 104, by viewing output signals (i.e., corresponding to graphics based output signals) displayed by the device display screen 104b, can be able to follow/learn the setup configuration of the one or more peripherals in the first set of peripherals 106, if desired. Appreciably, two platforms (one associated with the computer 102 and another one associated with the electronic device 104) can be visually perceived via the device display screen 104b.

In the case of automatic setup, the electronic device 104 can be configured to receive output signals (i.e., corresponding to control data based output signals) from the computer 102 and use the received output signals to automatically (i.e., without user intervention) configure corresponding one or more peripheral devices in the second set of peripherals 108. In this regard, it is appreciable that there is no need for any display of platform(s). Alternatively, the platform run by the electronic device 104 can be displayed and the platform can be visually updated per the received output signals so that a user of the electronic device 104 can visually perceive changes to the platform per setup configuration based on the received output signals. Thus a "step-by-step" tutorial can effectively be provided. It is to be noted that the output signals themselves need not necessarily be visually perceivable and only changes (due to the received output signals) to the platform run by the electronic device 104 are visually perceived via the device display screen 104b.

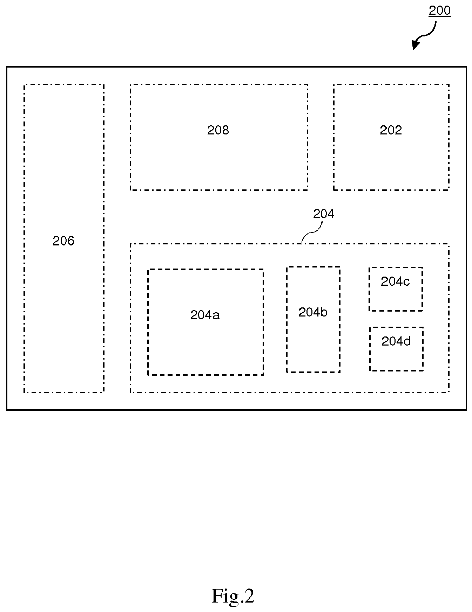

Each of the aforementioned platforms can be in the form of a graphics user interface (GUI) for configuring one or more peripheral devices connected to corresponding computer 102 and electronic device 104. The GUI can present one or more setup options for setting device parameters (i.e., setup configuration) associated with the peripheral device(s) as will be discussed with reference to Fig. 2 hereinafter.

Fig. 2 shows that the aforementioned platform(s) can be presented in the form of a graphics user interface (GUI) 200, in accordance with an embodiment of the disclosure. The GUI 200 can include one or more graphics based control portions for the aforementioned of setup configuration of one or more peripheral devices. The one or more graphics based control portion can, for example, include a lighting control portion 202, an audio control portion 204, a keyboard control portion 206 and a pointing device control portion 208.

In one exemplary scenario (not shown), the first set of peripherals 106 coupled to the computer 102 can include one or more speaker devices carrying light emitting elements, a keyboard and a pointing device such as a mouse. Moreover, the computer 102 can be used by a veteran gamer for playing a game on the computer 102.

The lighting control portion 202 can, for example, be used by the veteran gamer to configure the light emitting elements carried by the speaker device(s) in a manner so as to create a lightshow which could be reflective/indicative of the tempo of the game being played. For example, lighting effects (e.g., "motion," "ripple," "color," and "speed") generated by the light emitting elements can be controlled by the veteran gamer using the lighting control portion 202.

The audio control portion 204 can, for example, be used by the veteran gamer to configure the speaker device(s) in a manner so that audio output from the speaker device(s) can be audibly optimized based on, for example, tempo of the game being played. In one embodiment, the audio control portion 204 can include a plurality of sub control portions 204a/204b/204c/204d which can be used for controlling various aspects of audio output from the speaker device(s). For example, audio effects (e.g., "noise reduction settings," "voice morphing settings," "surround sound settings," "equalizer settings," "bass settings," and "volume settings") can be controlled by the veteran gamer using the audio control portion 204 so that audio output from the speaker device(s) can be audibly optimized based on the game being played.

The keyboard control portion 206 can, for example, be used by the veteran gamer to configure keys of the keyboard so as to facilitate effective gameplay. For example, via the keyboard control portion 206, the veteran gamer can define shortcut keys for performing certain game functions (e.g., activate special abilities of a game character in the game/ cause a game character to perform a certain activity when a shortcut key is pressed) while the game is being played.

The pointing device control portion 208 can, for example, be used by the veteran gamer to configure the mouse to facilitate effective gameplay. For example, via the pointing device control portion 208, the veteran gamer can assign certain game based actions to buttons carried by the mouse. As such, the buttons carried by the mouse can function as shortcut buttons in a manner analogous to the aforementioned shortcut keys. In another example, pointing speed of the mouse can be controlled by the veteran gamer using the pointing device control portion 208.

Based on setup configuration, by the veteran gamer, of one or more peripheral devices (e.g., speaker device(s), keyboard and/or mouse) in the first set of peripherals 106 coupled to the computer 102, output signals can be generated and communicated from the computer 102 to the electronic device 104 which may be used by an amateur gamer playing the same game. As mentioned earlier, output signals received by the electronic device 104 can be the basis of manual setup and/or automatic setup of one or more peripheral devices in the second set of peripherals 108.

In this regard, setup configuration per the veteran gamer can be shared with the amateur gamer, and such setup configuration can be instructive (i.e., to the amateur gamer). Therefore, gaming experience for the amateur gamer can be improved. In one example, in the case of manual setup, the GUI 200 as displayed on the computer display screen 102b can effectively be displayed on the device display screen 104b for the amateur gamer to follow and/or to study as the amateur gamer performs setup configuration of one or more peripheral devices in the second set of peripherals 108 using another platform (i.e., which can be analogous to the GUI 200) run on the electronic device 104.

Moreover, it is appreciable that in this manner, setup configuration created by gaming experts/enthusiasts (e.g., a veteran gamer) can be shared by other gamers (e.g., amateur gamers) who can easily upload, browse and/or download such setup configuration (i.e., as created by, for example, an expert gamer). Therefore, amateur gamers can experience the same exact gaming environment which more experienced gamers (e.g., expert gamers, enthusiast, veteran gamers) are using.

Furthermore, it is also appreciable that if a plurality of devices (e.g., a plurality of electronic devices 104) need to be setup, it can be easily achieved by manner of the aforementioned automatic setup where, for example, setup configuration by a veteran gamer can be uploaded (e.g., to a server) and other devices (e.g., electronic devices 104) used by amateur gamers can sync up to such a setup configuration via cloud computing. In this regard, it is possible for the aforementioned platform(s) to be hosted by a host device (e.g., a server) coupled to both the computer 102 and the electronic device(s).

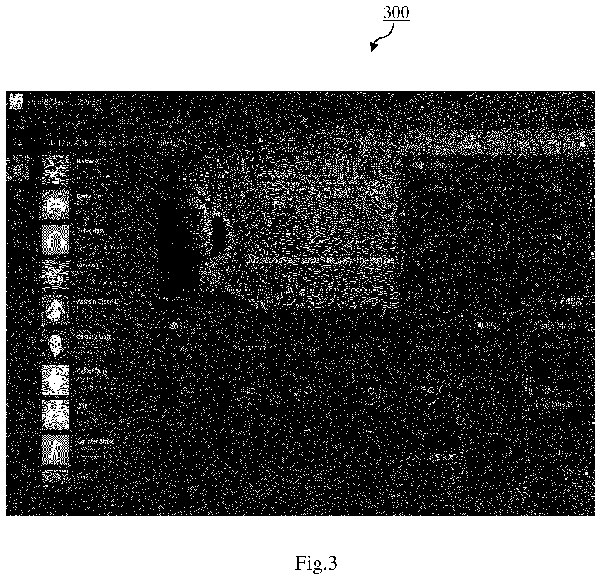

Fig. 3 shows an exemplary appearance 300 of the GUI 200 as discussed with reference to Fig. 2, in accordance with an embodiment of the disclosure.

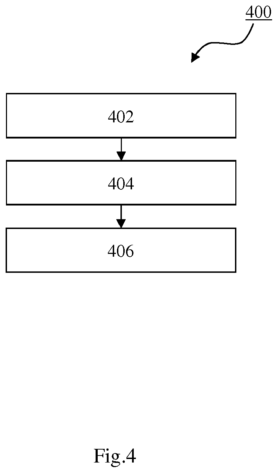

Fig. 4 shows a flow diagram for a setup configuration method 400 in association with the system 100 of Fig. 1, in accordance with an embodiment of the disclosure.

As shown, the setup configuration method 400 can include a setup step 402, a processing step 404 and a sharing step 406.

In regard to the setup step 402, a platform can be provided for use for setup configuration of one or more peripheral devices coupled to a computer. For example, a user (e.g., a veteran gamer) of the computer 102 can be provided with a platform (e.g., GUI 200) for setup configuration of one or more peripheral devices from the first set of peripherals 106.

In regard to the processing step 404, output signals can be generated based on setup configuration using the platform. For example, output signals can be generated at, and communicated from, the computer 102. Output signals can, in one example, correspond to control data based output signals. Output signals can, in another example, correspond to graphics based output signals.

In regard to the sharing step 406, generated output signals can be communicated for one or both of automatic setup and manual setup of corresponding one or more peripheral devices coupled to one or more other electronic devices. For example, output signals can be communicated from the computer 102 to one or more electronic devices 104. One or more peripheral devices from the second set of peripherals 108 coupled to the electronic device(s) 104 can be configured based on received output signals via one or both of manual setup and automatic setup. In a more specific example, where output signals are based on setup configuration of a keyboard coupled to the computer 102, a corresponding keyboard coupled to the electronic device 104 can be configured based on the received output signals via manual setup and/or automatic setup.

In the foregoing manner, various embodiments of the disclosure are described for addressing at least one of the foregoing disadvantages. Such embodiments are intended to be encompassed by the following claims, and are not to be limited to specific forms or arrangements of parts so described and it will be apparent to one skilled in the art in view of this disclosure that numerous changes and/or modification can be made, which are also intended to be encompassed by the following claims.

In one example, the system 100 can further include a host device (not shown) coupled to the computer 102 and the electronic device 104. The aforementioned platform can be hosted by the host device. The platform hosted by the host device can, in one example, be shared by the computer 102 and the electronic device 104 for setup configuration of one or more peripheral devices from the first set of peripherals 106 and/or the second set of peripherals 108. As such, it is appreciable that the aforementioned platform(s) need not necessarily reside locally in the computer 102 and/or the electronic device 104.

In another example, the system 100 can further include a host device (not shown) which can be a server and a plurality of electronic devices 104. The host device can be coupled to the computer 102 and the electronic devices 104. The aforementioned platform can be hosted by the host device and can be used by a veteran gamer playing a game run/executed on the computer 102 for setup configuration of one or more peripheral devices from the first set of peripherals 106. Output signals, based on such setup configuration, can be generated and communicated from the host device to the plurality of electronic devices 104. As such, it is appreciable that the platform hosted by the host device can be used by the veteran gamer for setup configuration and such platform can be accessed by users of the plurality of electronic devices 104 who can be amateur gamers. Moreover, the host device can include a processor which can be configured to generate output signals and output signals can be communicated from the host device to the electronic device(s) 104.

Therefore, it is appreciable that the aforementioned platform (e.g., GUI 200) can be a cloud based platform, in accordance with an embodiment of the disclosure.

In yet another example, the GUI 200 can further include an avatar display portion which can be configured to display a graphic image representative of a user (e.g., the aforementioned veteran gamer) of the platform so that amateur gamer(s) can easily identify whether such a platform is suitable for studying/following.

In yet a further example, the GUI 200 can further include a chat portion for use by users of the computer 102 and electronic device 104 to communicate (e.g., to chat) with each other.

## Claims

1. A system (100) for providing setup configuration of at least one peripheral device, the system comprising:
a computer (102) coupled to at least one peripheral device (106);
a platform (200) for setup configuration of the at least one peripheral device (106) coupled to the computer (102); and
an electronic device (104) coupled to at least one peripheral device (108);
wherein the computer (102) is configured to generate output signals based on the setup configuration and to communicate said output signals to the electronic device (104), and the electronic device (104) is configured to receive the output signals and to base setup configuration of the at least one peripheral device (108) coupled to the electronic device (104) on the received output signals via at least one of manual setup and automatic setup.

2. A system according to claim 1, wherein the system includes a first set of peripherals coupled to the computer and a second set of peripherals coupled to the electronic device.

3. A system according to claim 2, wherein the first and second sets of peripherals include: one or more speaker devices, the one or more speaker devices optionally comprising light emitting elements; a keyboard; and a pointing device.

4. A system according to any preceding claim, wherein the platform comprises local software run by the computer.

5. A system according to any of claims 1 to 3, wherein the platform is hosted externally to the computer.

6. A system according to any preceding claim, wherein the platform is in the form of a graphics user interface, GUI.

7. A system according to any preceding claim, comprising a platform associated with the computer for setup configuration of the peripheral device(s) coupled to the computer and a platform associated with the electronic device for setup configuration of the peripheral device(s) coupled to the electronic device.

8. A system according to claim 6 or claim 7, wherein the GUI includes one or more graphics based control portions for setup configuration of the peripheral devices.

9. A system according to claim 8, wherein the one or more graphics based control portions include a lighting control portion, an audio control portion, a keyboard control portion and a pointing device control portion.

10. A system according to claim 9 when appended to claim 3, wherein one or more of:
the lighting control portion is used to configure the light emitting elements carried by the speaker device(s) so as to create a lightshow indicative of a tempo of a game being played on the computer;
the audio control portion is used to configure the speaker device(s) so that audio output from the speaker device(s) is audibly optimized based on a tempo of a game being played on the computer;
the keyboard control portion is used to configure keys of the keyboard so as to define shortcut keys for performing certain functions of a game being played on the computer;
the pointing device control portion is used to: configure the mouse to assign certain game based actions of a game being played on the computer to buttons carried by the mouse; or to configure a pointing speed of the mouse.

11. A system as claimed in any preceding claim, wherein the setup configuration of the peripheral device(s) coupled to the electronic device is based on manual setup, and wherein the output signals correspond to a screen capture of a display screen of the computer showing the platform with setup configuration for one or more peripheral devices coupled to the computer, the received output signals being displayed via a display screen of the electronic device.

12. A system as claimed in any of claims 1 to 10, wherein the setup configuration of the peripheral device(s) coupled to the electronic device is based on automatic setup, and wherein the output signals correspond to setup configuration data for one or more peripheral devices coupled to the computer, the received output being used to automatically configure one or more peripheral devices coupled to the electronic device.

13. A system as claimed in any preceding claim, wherein the system includes a server and a plurality of electronic devices.

14. A system as claimed in any preceding claim, wherein a user of the computer is a veteran gamer and a user of the electronic device(s) is an amateur gamer.

15. A setup configuration method (400) comprising:
a setup step (402) where a platform (200) is provided for setup configuration of at least one peripheral device (106) coupled to a computer (102);
a processing step (404) where output signals are generated based on the setup configuration using the platform; and
a sharing step (406) where the generated output signals are communicated for setup configuration of corresponding at least one peripheral device (108) coupled to an electronic device (104),
wherein setup configuration of the corresponding at least one peripheral device is based on received output signals via at least one of manual setup and automatic setup.
